# EUROPÄISCHE PATENTSCHRIFT

(11) **EP 3 104 665 B1**
(45) Veröffentlichungstag und Bekanntmachung des Hinweises auf die Patenterteilung: **26.02.2020**
(21) Anmeldenummer: 16173460.3
(22) Anmeldetag: 08.06.2016
(51) Int. Cl.: H05B 6/12

(54) **INDUKTIONSHEIZEINRICHTUNG UND INDUKTIONSKOCHFELD MIT EINER SOLCHEN INDUKTIONSHEIZEINRICHTUNG**
INDUCTION HEATING DEVICE AND INDUCTION HOB WITH SUCH AN INDUCTION HEATING DEVICE
DISPOSITIF DE CHAUFFAGE À INDUCTION ET CHAMP DE CUISSON À INDUCTION EQUIPÉ D'UN TEL DISPOSITIF DE CHAUFFAGE À INDUCTION

(30) Priorität: 10.06.2015 DE 102015210650
(43) Veröffentlichungstag der Anmeldung: 14.12.2016
(73) Patentinhaber: E.G.O. Elektro-Gerätebau GmbH, 75038 Oberderdingen (DE)
(72) Erfinder: Gaertner, Michael, 12555 Berlin (DE); Lomp, Stephane, 75038 Oberderdingen (DE); Rupp, Michael, 75031 Eppingen (DE); Wein, Siegbert, 76703 Kraichtal (DE); Freis, Konstantin, 75015 Bretten (DE)
(74) Vertreter: Patentanwälte Ruff, Wilhelm, Beier, Dauster & Partner mbB

(56) Entgegenhaltungen:
- WO-A1-2015/029441
- DE-A1- 2 358 561
- DE-A1-102007 006 280
- DE-U1-202004 012 712

## Beschreibung

### Anwendungsgebiet und Stand der Technik

Die Erfindung betrifft ein Induktionskochfeld mit mindestens einer Induktionsheizeinrichtung, die mindestens eine Induktionsheizspule und eine Steckkontakteinrichtung aufweist.

Es sind beispielsweise aus der DE 102007006280 A1 eine Konstruktion und auch ein Verfahren bekannt, wie Induktionsheizspulen in einer Induktionsheizeinrichtung bzw. einem Induktionskochfeld elektrisch angeschlossen werden können. Dabei geht es maßgeblich um eine gute Erreichbarkeit der elektrischen Verbindung. Diese ist bei der Montage nicht ganz leicht zu erreichen, da sie üblicherweise im Induktionskochfeld eine Ebene tiefer als diejenige der Induktionsheizspulen stattfindet.

Aus der DE 202004012712 U1 ist ein Induktionskochfeld mit einer elektrischen Kontaktverbindung bekannt. Die Kontaktverbindung ist dabei auf einer Leiterplatte befestigt als Kontaktelemente in Form von Kontaktzungen. Sie sind in einem auf der Leiterplatte befestigten Sockelgehäuse angeordnet. Darauf kann ein Steckergehäuse aufgesteckt werden, in welches in entsprechende Einführöffnungen an der Seite Anschlussleiter einer Induktionsheizspule eingesteckt werden. Die Induktionsheizspule ist auch auf der Leiterplatte angeordnet. Der nähere Aufbau des Induktionskochfelds ist nicht weiter erläutert.

Aus der WO 2015/029441 A1 ist der Aufbau einer Induktionsheizspule auf einem Spulenträger bekannt. Diese Induktionsheizspule wird dann in ein Induktionskochfeld eingebaut, wobei das Induktionskochfeld ein Gehäuse unter einer Kochfeldplatte aufweist, in dem der Spulenträger gehaltert ist. Unterhalb des Spulenträgers ist eine Leiterplatte mit Bauteilen zur Ansteuerung der Induktionsheizspule vorgesehen.

### Aufgabe und Lösung

Der Erfindung liegt die Aufgabe zugrunde, ein eingangs genanntes Induktionskochfeld zu schaffen, mit dem es möglich ist, einen Aufbau einer Induktionsheizeinrichtung sowie deren Montage und eine Montage eines Induktionskochfeldes zu vereinfachen und gleichzeitig möglichst sicher auszugestalten.

Gelöst wird diese Aufgabe durch ein Induktionskochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass die Induktionsheizeinrichtung einen flächig ausgebildeten bzw. flächigen und/oder flachen Spulenträger für mindestens eine Induktionsheizspule aufweist. Dabei kann der Spulenträger im Wesentlichen eine flache Platte sein, unter Umständen mit einem nach oben und/oder nach unten gezogenen Rand und Versteifungsrippen sowie ggf. Ausnehmungen. An der Unterseite des Spulenträgers ist die Steckkontakteinrichtung angeordnet, die eine Steckrichtung nach unten bzw. weg von der Fläche des Spulenträgers aufweist. Vorteilhaft ist die Steckrichtung im Wesentlichen rechtwinklig zur Fläche des Spulenträgers. Die Steckkontakteinrichtung weist ein Steckergehäuse auf, welches an der Unterseite des Spulenträgers derart gehalten bzw. gelagert ist, dass das Steckergehäuse in einer Ebene parallel zur Fläche des Spulenträgers bewegbar ist bzw. eine Bewegbarkeit aufweist. Diese Bewegbarkeit ist eingeschränkt bzw. weist einen definierten und begrenzten bzw. maximalen Bewegungsweg auf. Dieser Bewegungsweg kann zwischen 1 mm und 10 mm oder sogar 15 mm liegen, vorteilhaft zwischen 1 mm und 5 mm. In Steckrichtung dagegen liegt die Steckkontakteinrichtung am Spulenträger an und weist keinen Bewegungsweg auf. So wird eine Art schwimmende Lagerung der Steckkontakteinrichtung bzw. des Steckergehäuses am Spulenträger erreicht. Durch die Beweglichkeit des Steckergehäuses im Wesentlichen rechtwinklig zur Steckrichtung kann unabhängig von der Position des Spulenträgers eine gewisse Anpassung des Steckergehäuses an die Position des Gegenstecker erfolgen, so dass Toleranzen leicht ausgeglichen werden können unabhängig von einer notwendigen Lageänderung des Spulenträgers. Dies vereinfacht die Herstellung eines elektrischen Anschlusses bzw. einer Steckverbindung mit der Steckkontakteinrichtung.

Des Weiteren weist das Steckergehäuse mindestens zwei Aufnahmekammern auf mit einer Richtung bzw. einer Längsrichtung parallel zur Steckrichtung, also wiederum im Wesentlichen rechtwinklig zur Fläche des Spulenträgers. Die Aufnahmekammern sind nach unten offen, und in jeder der Aufnahmekammern ist ein Steckkontakt angeordnet, der vorzugsweise länglich ist bzw. eine Längserstreckung hat. Diese Längserstreckung sollte wiederum parallel zur Längsrichtung der Aufnahmekammern und somit zur Steckrichtung sein, so dass die Steckkontakte im Wesentlichen rechtwinklig zur Fläche des Spulenträgers stehen. Schließlich ist noch eine Kontaktierungsleitung vorgesehen, die vorzugsweise frei verlaufend und flexibel ist. Sie verläuft von dem Steckkontakt zu der Induktionsheizspule, also von zwei Steckkontakten zu einer Induktionsheizspule als deren elektrischer Anschluss.

Somit wird an der Induktionsheizeinrichtung bzw. am Spulenträger als deren hauptsächlich festem und tragendem Bestandteil eine Steckkontakteinrichtung nach unten geschaffen, die es ermöglicht, durch Ansetzen der Induktionsheizeinrichtung bzw. des Spulenträgers am Induktionskochfeld gleichzeitig die Steckkontaktierung und somit einen elektrischen Anschluss herzustellen. Durch die schwimmende Lagerung bzw. durch die definierte Bewegbarkeit der Steckkontakteinrichtung relativ zum Spulenträger mit seitlicher Bewegbarkeit kann ein Ausgleich von Toleranzen, Ungenauigkeiten odgl. erfolgen. Des Weiteren kann dadurch das Ansetzen und Aufstecken der Steckkontaktierung per Hand bei der Montage des Induktionskochfelds sicherer und einfacher gemacht werden.

In vorteilhafter Ausgestaltung der Erfindung sind auf dem Spulenträger genau zwei Induktionsheizspulen angeordnet. Sie können mit derselben Steckkontakteinrichtung elektrisch angeschlossen werden, die dann vier Steckkontakte aufweist. Diese sind vorteilhaft im Viereck bzw. Rechteck zueinander angeordnet, also nicht in einer Reihe. Die zwei Induktionsheizspulen sind besonders vorteilhaft gleich groß und/oder gleich ausgebildet. Es ist möglich, eine solche Induktionsheizeinrichtung im Wesentlichen spiegelsymmetrisch auszugestalten, wobei die Steckkontakteinrichtung auf der Spiegelachse liegt. Lediglich die Wicklungsrichtungen der Induktionsheizspulen können eine Abweichung von dieser Spiegelsymmetrie darstellen.

Die vorgenannte flexible Kontaktierungsleitung der Steckkontakte an eine Induktionsheizspule ist vorteilhafte eine Drahtlitze. Besonders vorteilhaft ist es eine gleiche Drahtlitze wie diejenige, aus der die Induktionsheizspule gewickelt ist. So wird auch ihre vorgenannte Bewegbarkeit bzw. Flexibilität erreicht. In vorteilhafter Ausgestaltung der Erfindung ist eine Kontaktierungsleitung an einen Steckkontakt ein abstehender Abschnitt der Induktionsheizspule bzw. ein abstehender Abschnitt von deren Drahtlitze oder Wicklung, so dass die Kontaktierungsleitung durchgängig und ohne Unterbrechung vom Steckkontakt in die Induktionsheizspule übergeht.

Bevorzugt ist eine Kontaktierungsleitung an einem oberen Endbereich des Steckkontakts befestigt, besonders bevorzugt aber nicht am ganz obersten Ende. Eine Befestigung kann durch Schweißen oder Löten erfolgen, so dass sie mechanisch stabil und elektrisch sicher ist.

In einer Ausgestaltung der Erfindung können die Steckkontakte zwar Steckerstifte sein. In einer anderen und bevorzugten Ausgestaltung der Erfindung sind die Steckkontakte Steckerhülsen, die wiederum auf Steckerstifte aufgesteckt werden. Ein Durchmesser der Steckerhülsen kann dabei im Bereich zwischen 2 mm und 8 mm liegen, um mechanisch stabil und elektrisch sicher zu sein.

In weiterer Ausgestaltung der Erfindung können die Steckkontakte einen Außendurchmesser aufweisen, der kleiner ist als der Innendurchmesser der Aufnahmekammern auf der jeweils entsprechenden Höhe. So ist eine definiert eingeschränkte aber freie Bewegbarkeit auch der Steckkontakte in den Aufnahmekammern möglich. Insbesondere ist dies eine Bewegbarkeit in Richtung quer zur Steckrichtung. Vorteilhaft ist eine Bewegbarkeit als eine Art leichtes Verkippen der Steckkontakte möglich, so dass diese mit ihrer Längsrichtung ein wenig, vorteilhaft 1° bis maximal 5° oder 10°, zur Steckrichtung verkippen können. So ist ein Ausgleich von Abweichungen der Ausrichtung der Steckkontakte bzw. von Steckerhülsen und Steckerstiften von der exakten Steckrichtung bzw. rechtwinkligen Richtung zur Fläche des Spulenträgers möglich. Der Außendurchmesser der Steckkontakte kann 1% bis maximal 20%, vorteilhafter 3% bis 8%, kleiner als der Innendurchmesser der Aufnahmekammern sein. Das lichte Maß bzw. die Größe kann also entsprechend geringer sein.

Eine bewegbare Lagerung bzw. eine vorgenannte schwimmende Lagerung der Steckkontakteinrichtung an dem Spulenträger kann beispielsweise einrastbar ausgebildet sein mit Einrasten für eine Basisplatte der Steckkontakteinrichtung bzw. ihres Steckergehäuses. Somit kann die Steckkontakteinrichtung, vorteilhaft über die genannte Basisplatte, unverlierbar aber mit der erfindungsgemäß definierten Bewegbarkeit an dem Spulenträger gelagert bzw. gehalten werden. Rasthaken odgl. können an mehreren Seiten der Steckkontakteinrichtung bzw. der Basisplatte vorgesehen sein, vorteilhaft an gegenüberliegenden. Die Rasthaken selber oder ähnliche Anschläge wie Seitenwände können die maximale Bewegbarkeit Steckergehäuses bzw. der Basisplatte an dem Spulenträger definieren. Es kann vorgesehen sein, dass ein Einrasten manuell möglich ist, das Lösen einer Rastverbindung jedoch nur mit Werkzeug bzw. mindestens einem Schraubendreher.

Des Weiteren ist es möglich, dass das Steckergehäuse an zwei gegenüberliegenden Seiten von übergreifenden Abschnitten gehalten wird, wobei es zu seitlichen Anschlägen eben noch die genannte freie Bewegbarkeit aufweist. So kann das Steckergehäuse, beispielsweise mit der vorgenannten Basisplatte, in eine Art Tasche an der Unterseite des Spulenträgers geschoben werden.

Ein Steckergehäuse der Steckkontakteinrichtung ist vorteilhaft zweiteilig ausgebildet. Einerseits kann es eine vorgenannte Basisplatte aufweisen, die insbesondere an dem Spulenträger befestigt wird. Dazu sollte sie ausreichend stabil sein. Die Lagerung der Steckkontakteinrichtung bzw. des Steckergehäuses an dem Spulenträger erfolgt über eine Steckkontakteinrichtungsaufnahme, beispielsweise die vorgenannten Rasthaken oder übergreifenden Abschnitte. Die Steckkontakteinrichtungsaufnahme definiert dann den vorgenannten maximalen Bewegungsweg der Steckkontakteinrichtung bzw. des Steckergehäuses an dem Spulenträger.

Die vorgenannte Basisplatte kann vorzugsweise eine Radialhalterung für die Steckkontakte aufweisen, insbesondere in Form einer Bohrung und/oder eines Hülsenabschnitts, der von der Basisplatte absteht, vorteilhaft in Steckrichtung weg vom Spulenträger. Diese Radialhalterung bewirkt eine vorgenannte Verschwenkbarkeit bzw. Verkippbarkeit der Steckkontakte relativ zur Steckrichtung. Sie sollte etwas größer sein als das Außenmaß des Steckkontakts für die vorgenannte Bewegbarkeit bzw. Schwenkbarkeit.

Vorteilhaft weist die Steckkontakteinrichtung bzw. das Steckergehäuse einen Deckel auf, der an der Basisplatte befestigt wird, vorteilhaft aufgesteckt wird. Das Aufstecken kann mittels einer Rastverbindung erfolgen, die selbsttätig beim Aufstecken hergestellt wird und beispielsweise nur mittels eines Werkzeugs wieder lösbar ist. Der Deckel dient im Wesentlichen dazu, die Steckkontakte am Steckergehäuse zu halten bzw. in vorgenannten Bohrungen und/oder Hülsenabschnitten an der Basisplatte, also in den Aufnahmekammern. Der Deckel kann senkrecht zur Fläche des Induktionsträgers an der Basisplatte befestigt bzw. auf diese aufgesteckt werden. Für jeden Steckkontakt weist der Deckel vorteilhaft eine Durchgangsöffnung auf, durch welche die Steckkontakte durchstehen bzw. durchragen und bevorzugt ein Stück über den Deckel nach unten stehen. Der Deckel kann fest und in unbewegbarer Position an der Basisplatte befestigt bzw. aufgesteckt sein. Wenn die vorgenannten Durchgangsöffnungen ebenfalls etwas größer sind als der Außendurchmesser der Steckkontakte in diesem Bereich kann die vorteilhafte Schwenkbarkeit bzw. Bewegbarkeit der Steckkontakte relativ zur Steckrichtung erhalten bleiben.

Es ist möglich, dass die Aufnahmekammern der Steckkontakteinrichtungen, in denen die Steckkontakte angeordnet sind, von Aufnahmehülsen gebildet werden, die als eine Art Hülsenabschnitt von der vorgenannten Basisplatte wegstehen. Diese Hülsenabschnitte bilden einen Teil der seitlichen Halterung der Steckkontakte als Aufnahmekammer. Eine Begrenzung nach oben wird durch die Basisplatte selbst gebildet, wobei hier evtl. durch vorgenannte Bohrungen ein Teil der Steckkontakte nach oben hindurchstehen kann. Nach unten werden die Aufnahmekammern von dem vorgenannten Deckel begrenzt, wobei in dem Deckel pro Aufnahmekammer eine Durchgangsöffnung vorgesehen ist, durch die die Steckverbindung hergestellt wird. Vorteilhaft steht der Steckkontakt durch die Durchgangsöffnung nach unten hervor.

In vorteilhafter Ausgestaltung der Erfindung verlaufen die vorgenannten Kontaktierungsleitungen von den Steckkontakten seitlich aus der Steckkontakteinrichtung heraus, bevorzugt zwischen Basisplatte und Deckel. Besonders bevorzugt verlaufen die Kontaktierungsleitungen aus den vorgenannten Aufnahmehülsen heraus, die von der Basisplatte abstehen. Diese Aufnahmehülsen weisen einen seitlichen Schlitz auf, so dass die Kontaktierungsleitungen relativ nahe an der Basisplatte verlaufen können. Des Weiteren ist vorteilhaft vorgesehen, dass die Kontaktierungsleitungen in unterschiedliche Richtungen von der Steckkontakteinrichtung abgehen, insbesondere in gegenüberliegende Richtungen. So ist es vorteilhaft möglich, dass die Steckkontakteinrichtung zwischen zwei Induktionsspulen angeordnet ist, so dass die Kontaktierungsleitungen an die Induktionsheizspulen auch in etwa gleich lang sind.

Um die Steckkontakte sicher in den Aufnahmekammern zu halten, können sie eine Verdickung oder einen seitlich abstehenden Vorsprung aufweisen, der nach Art eines umlaufenden Kragens ausgebildet sein kann. Diese Verdickung bzw. der Vorsprung ist besonders vorteilhaft breiter als eine Durchgangsöffnung durch den Deckel um ein Durchrutschen durch die Durchgangsöffnung zu verhindern. Des Weiteren kann die Verdickung bzw. der Vorsprung zwischen Deckel und Aufnahmehülse an der Basisplatte liegen und einen Bewegungsweg des Steckkontakts entlang der Steckrichtung begrenzen. So kann er beispielsweise auf die vorgenannte geringe Bewegbarkeit bzw. Verschwenkbarkeit begrenzt werden.

In vorteilhafter Ausgestaltung der Erfindung ist die Steckkontakteinrichtung nahe an einem Außenbereich bzw. Außenrand des Spulenträgers angeordnet. Dabei kann sie sich noch innerhalb der Fläche oder Projektion des Spulenträgers befinden und an einen Außenrand angrenzen. So ist eine leichte optische Kontrolle beim Ansetzen bzw. Herstellen der Steckverbindung möglich.

In weiterer Ausgestaltung der Erfindung ist es möglich, dass an der Steckkontakteinrichtung, insbesondere an einer Außenseite, die frei zugänglich ist, weil sie nur ein geringes Stück oder gar nicht vom dem Spulenträger überragt wird, ein weiterer Steckverbinder vorgesehen ist für eine weitere Steckkontaktierung. Diese weitere Steckverbindung kann vorteilhaft durch eine werkzeuglos montierbare und auch wieder lösbare Montage befestigt werden. Hierfür eignet sich eine Rastverbindung, so dass die Steckkontakteinrichtung den weiteren Steckverbinder sozusagen Huckepack trägt. Beide weisen dieselbe Steckrichtung auf, so dass mit einem einzigen Montagevorgang beide Steckverbindungen hergestellt werden können. Während die erfindungsgemäße Steckkontakteinrichtung als Leistungsanschluss für die Induktionsheizspule gedacht ist, kann ein weiterer Steckverbinder beispielsweise Sensorspulen oder sonstige Sensoren elektrisch anschließen.

Das gesamte Induktionskochfeld weist unter einer Kochfeldplatte ein Generatorgehäuse auf, in dem sich ein Generatorbauteilträger befindet, vorteilhaft eine sogenannte Generatorplatine. Darauf sind Leistungsbauteile und eventuell auch Steuerung sowie weitere Bauteile angeordnet und elektrisch angeschlossen. Oberhalb des Generatorgehäuses ist die Induktionsheizeinrichtung angeordnet. Dazwischen kann ein Abdeckblech odgl. verlaufen. Die Steckkontakteinrichtung weist dabei von der Induktionsheizeinrichtung oben nach unten auf den Generatorbauteilträger zu, was dann auch die Steckrichtung ergibt. Auf dem Generatorbauteilträger sind mindestens zwei untere Steckkontakte fest und unbewegbar angeordnet, die nach oben stehen und auf welche die Steckkontakteinrichtung aufgesteckt wird. Die unteren Steckkontakte können fest an dem Generatorbauteilträger angeordnet sein, beispielsweise direkt in diesen eingedrückt sein, sowie elektrisch kontaktiert sein.

In Ausgestaltung der Erfindung ist es möglich, dass die Steckkontakte auf dem Generatorbauteilträger Steckerstifte sind, die nach oben stehen, wobei dann die Steckkontakte der Steckkontakteinrichtung der Induktionsheizeinrichtung vorgenannte Steckerhülsen sind. Die Steckerstifte können in Längsrichtung geschlitzt und/oder durchmesserveränderlich sein zur Anpassung an die Steckerstifte bei gleichzeitig fester und sicherer elektrischer Kontaktierung. Die Steckerhülsen sind dann vorteilhaft im Durchmesser unveränderlich. So sind sie auch leichter herstellbar.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Schrägansicht einer erfindungsgemäßen Induktionsheizeinrichtung mit einem Spulenträger, zwei Induktionsheizspulen darauf und einer Steckkontakteinrichtung an der Unterseite,
- Fig. 2: die Induktionsheizeinrichtung aus Fig. 1 an einem Induktionskochfeld,
- Fig. 3: eine vergrößerte Darstellung der Steckkontakteinrichtung ohne Spulenträger auf einem Generatorbauteilträger des Induktionskochfelds,
- Fig. 4: die Darstellung entsprechend Fig. 3 mit von dem Generatorbauteilträger abgezogener Steckkontakteinrichtung,
- Fig. 5: in auseinandergezogener Darstellung die Steckkontakteinrichtung mit Steckergehäuse aus Basisplatte und Deckel sowie dazwischen angeordneten Steckerhülsen,
- Fig. 6: eine Schrägansicht der Basisplatte aus Fig. 5 von unten,
- Fig. 7: eine Schnittdarstellung durch die Steckkontakteinrichtung entsprechend Fig. 3 mit einem eingesteckten Steckerstift,
- Fig. 8: eine Ansicht auf die Steckkontakteinrichtung an der Induktionsheizeinrichtung von unten,
- Fig. 9: eine Schrägansicht der Unterseite des Spulenträgers mit einer Steckergehäuseaufnahme und
- Fig. 10: eine Darstellung der Steckergehäuseaufnahme aus Fig. 9 in Einschieberichtung der Steckkontakteinrichtung.

### Detaillierte Beschreibung der Ausführungsbeispiele

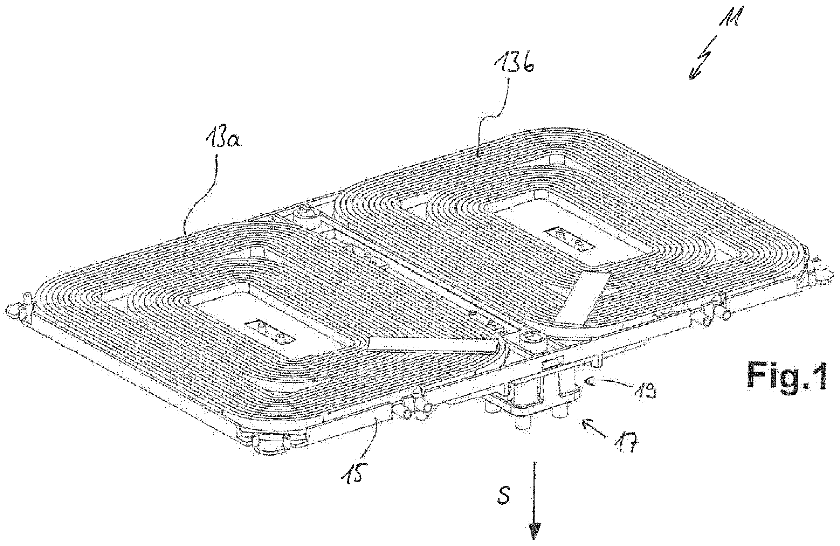

In der Fig. 1 ist eine erfindungsgemäße Induktionsheizeinrichtung 11 in Schrägansicht dargestellt. Sie weist zwei Induktionsheizspulen 13a und 13b auf, die flach gewickelt sind mit angenäherter rechteckiger Form. Die Induktionsheizspulen 13a und 13b liegen auf einem flächigen und teils gitterartig ausgebildeten Spulenträger 15 auf, der beide Spulen trägt. An einer Unterseite des Spulenträgers 15 ist eine Steckkontakteinrichtung 17 gemäß der Erfindung angeordnet, die ein Steckergehäuse 19 aufweist. Die Steckrichtung S geht nach unten bzw. verläuft im Wesentlichen rechtwinklig zur flächigen Ausdehnung sowohl des Spulenträgers 15 als auch der Induktionsheizspulen 13a und 13b.

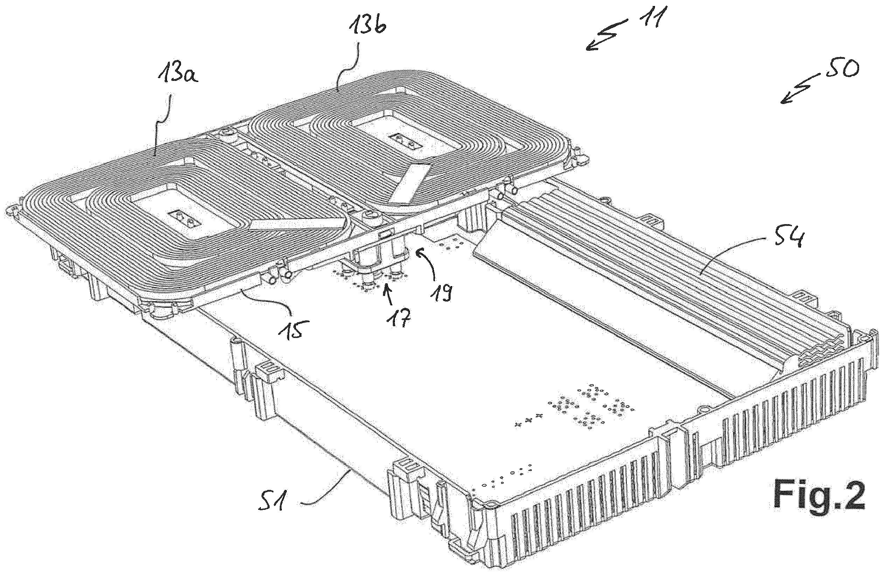

Die Fig. 2 zeigt die Induktionsheizeinrichtung 11 eingebaut in einem erfindungsgemäßen Induktionskochfeld 50, von dem der Einfachheit halber einige Teile weggelassen worden sind, und zwar eine Kochfeldplatte darüber, eine zweite Induktionsheizeinrichtung und ein Tragblech, welches direkt unter dem Spulenträger 15 verlaufen würde. Das erfindungsgemäße Induktionskochfeld 50 weist ein Generatorgehäuse 51 auf, welches im Wesentlichen wannenartig und entsprechend dem Stand der Technik ausgebildet ist. In dem Generatorgehäuse 51 ist ein Generatorbauteilträger 53 angeordnet, üblicherweise eine große Leiterplatte. Zu einer Seite hin ist ein großer Kühlkörper 54 angeordnet. Viele weitere notwendige Komponenten sind hier der Übersichtlichkeit halber nicht dargestellt, für den Fachmann jedoch leicht zu realisieren.

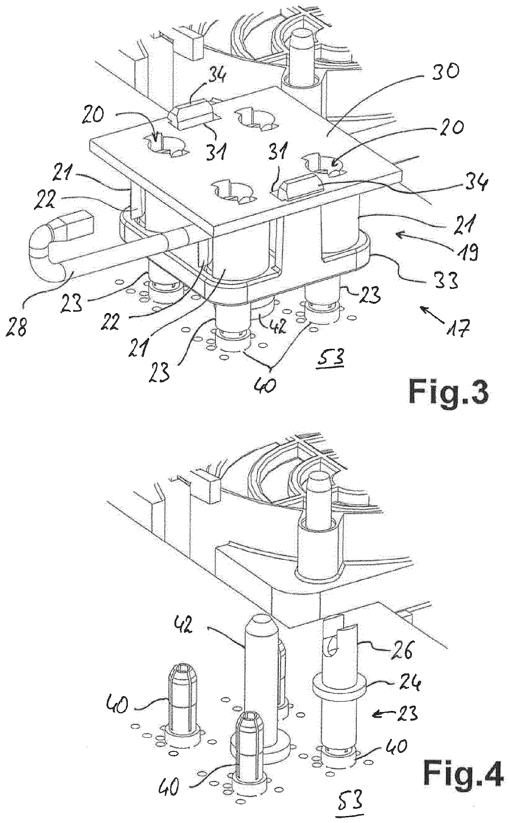

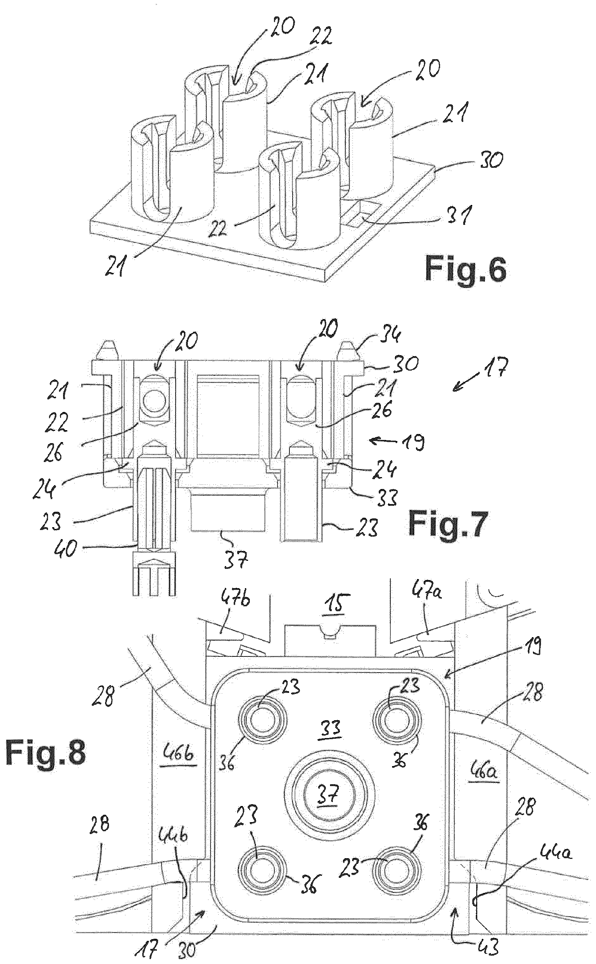

Auf dem Generatorbauteilträger 53 ist die Steckkontakteinrichtung 17 aufgesteckt und somit elektrisch kontaktiert. Diese elektrische Kontaktierung ist in den Fig. 3 und 4 vergrößert dargestellt, und zwar der Einfachheit halber ohne Spulenträger 15. Die Fig. 3 zeigt im Wesentlichen die Steckkontakteinrichtung 17 mit dem Steckergehäuse 19, welches vier Aufnahmekammern 20 aufweist, die im Wesentlichen von Aufnahmehülsen 21 gebildet werden. Diese sind, wie nachfolgend dann die Fig. 6 darstellt, mit jeweils zwei seitlichen Schlitzen 22 versehen. In den Aufnahmekammern 20 ist jeweils eine Steckerhülse 23 vorgesehen, wie dies sehr gut aus der Schnittdarstellung der Steckkontakteinrichtung 17 gemäß Fig. 7 zu ersehen ist. Auch die Fig. 4 zeigt eine einzelne längliche Steckerhülse 23, die einen umlaufenden Kragen 24 in etwa auf halber Länge aufweist. Oben in einem Anschlussabschnitt 26 ist ein breiter durchgehender Schlitz vorgesehen, in dem eine in Fig. 3 dargestellte Drahtlitze 28 befestigt und elektrisch kontaktiert ist, beispielsweise festgelötet oder festgeschweißt ist. Die Drahtlitze 28 besteht vorteilhaft aus demselben Material wie die Induktionsheizspulen 13a und 13b und ist somit auch etwas flexibel. Sie bildet die genannte flexible Kontaktierungsleitung, die gem. Fig. 8 frei verläuft.

Die Aufnahmekammern 20 bzw. die Aufnahmehülsen 21 sind an einer Basisplatte 30 des Steckergehäuses 19 ausgebildet, wobei die Aufnahmekammern 20 durch entsprechende Bohrungen in der Basisplatte 30 nach oben offen sind. Des Weiteren weist die Basisplatte 30 noch zwei rechteckige Rastöffnungen 31 auf.

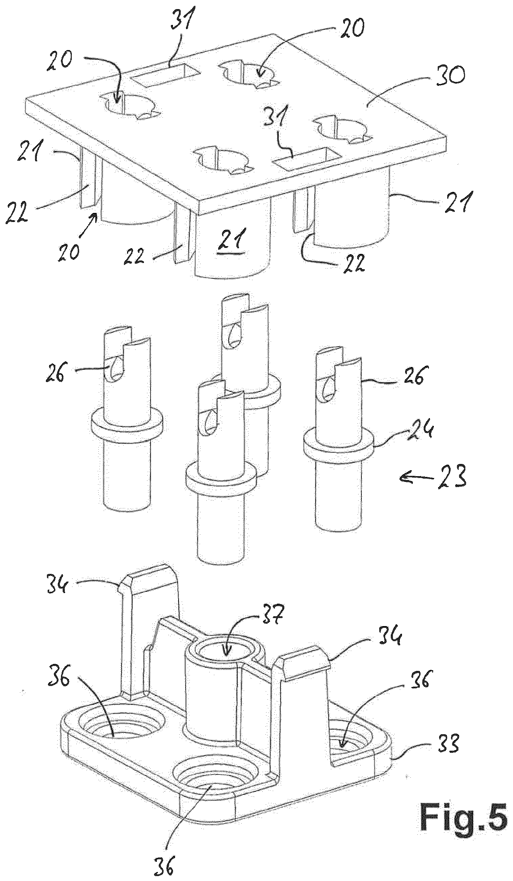

Ein Deckel 33 verschließt die Aufnahmekammern 20 nach unten zumindest teilweise, um ein Herausfallen der Steckerhülsen 23 zu verhindern. Der Deckel 33 ist mittels Rasthaken 34 in den Rastöffnungen 31 im zusammengebauten Zustand des Steckergehäuses 19 entsprechend Fig. 3 an der Basisplatte 30 befestigt. Aus den Fig. 5 und 7 ist zu ersehen, dass im Deckel 33 Durchgangsöffnungen 36 vorgesehen sind, die mehrfach gestuft ausgebildet sind mit einer Anschrägung oben, die zur leichteren Einführung dient. Im oberen breitesten Bereich ist an die Anschrägung anschließend ein tieferer Bereich vorgesehen, der den Kragen 24 der Steckerhülsen 23 aufnehmen kann. Die verjüngte durchgehende Durchgangsöffnung 36 darunter ist, wie die Fig. 7 zeigt, deutlich kleiner als der Kragen 24 und etwas größer als der Außendurchmesser der Steckerhülse 23 selbst. Wie vor allem auch die Schnittdarstellung der Fig. 7 zeigt, wird der Kragen 24 nach oben durch die Aufnahmehülse 21 bzw. deren Stirnseite gehalten und nach unten von der Stufenform der Durchgangsöffnung 36. Wie aus den Fig. 3 und 7 deutlich zu sehen ist, stehen die Steckerhülsen 23 weit nach unten über den Deckel 33 hervor.

Auf dem Generatorbauteilträger 53 sind Steckerstifte 40 aufgebracht, die mit abstehenden Abschnitten entsprechend Fig. 7 in Öffnungen im Generatorbauteilträger 53 eingedrückt sind. Eine elektrische Kontaktierung erfolgt über ein Verlöten. Die vier Steckerstifte 40 entsprechend Fig. 4 sind gleichmäßig verteilt im oberen Bereich geschlitzt für einen flexiblen und somit guten elektrischen Kontakt zu den Steckerhülsen 23. Die Fig. 7 zeigt in der Schnittdarstellung, wie weit ein Steckerstift 40 in die Steckerhülse 23 entlang der Steckrichtung S eingesteckt worden ist bei hergestelltem Kontakt.

Um ein Ansetzen der Steckkontakteinrichtung 17 am Generatorbauteilträger 53 zu erleichtern, ist noch ein Zentrierstift 42 vorgesehen. Dieser ragt deutlich höher als die Steckerstifte 40 und ist im oberen Bereich ebenfalls stark verjüngt. So kann er beim Heranführen der Steckkontakteinrichtung 17 entlang der Steckrichtung S an den Generatorbauteilträger 53 als erster in eine Zentrieröffnung 37 im Deckel 33, die aus Fig. 8 zu ersehen ist, eingesteckt werden. Dies reicht als ausreichende Führung, damit dann die Steckerhülsen 23 weitgehend lagerichtig entlang der Steckrichtung S an die Steckerstifte 40 herangeführt werden, so dass dann mit entsprechendem Druck die Steckkontakteinrichtung 17 auf die Steckerstifte 40 des Generatorbauteilträgers 53 aufgesteckt werden kann. Ein Ausgleich von Toleranzen oder Ungenauigkeiten bei der Positionierung kann durch die vorgenannte Bewegbarkeit sowohl des Steckergehäuses 19 am Spulenträger 15 als auch der Steckerhülsen 23 im Steckergehäuse 19 selbst erreicht werden.

Die seitlichen Schlitze 22 der Aufnahmekammern 20 bzw. der Aufnahmehülsen 21 weisen den aus Fig. 8 erkennbaren Vorteil auf, dass hier jeweils nach links und nach rechts zwei Drahtlitzen 28 von den vier Steckerhülsen 23 abgehen können, die zu den Induktionsheizspulen 13 verlaufen. Durch die seitliche Wegführung der Drahtlitzen 28 als vorgenannte flexible Kontaktierungsleitung wird die Bauhöhe gering gehalten. Eine Verbindung der Drahtlitzen 28 an die Steckerhülsen 23 erfolgt vorteilhaft vor dem Einsetzen der Steckerhülsen in das Steckergehäuse 19 bzw. in die Aufnahmekammern 20, also vor Zusammenbau von Basisplatte 30 und Deckel 33.

Aus der Schnittdarstellung der Fig. 7 ist noch zu erkennen, dass die Steckerhülsen 23 in den Aufnahmekammern 20 und auch in den Durchgangsöffnungen 36 nicht ganz eng gehalten werden, sondern etwas Bewegungsfreiheit bzw. Spielraum haben. So können sie einzeln in einer Ebene rechtwinklig zur Steckrichtung S etwas verschoben werden als Ausgleich. Vor allem können sie etwas verkippt werden relativ zur Steckrichtung S, um damit Positionstoleranzen der Steckerstifte 40 auf dem Generatorbauteilträger 53 auszugleichen. Ebenso kann ein leichtes Abweichen der Längsrichtung der Steckerstifte 40 von der Steckrichtung S ausgeglichen werden. Dennoch sollte die Bemaßung so ausgelegt sein, dass die Steckerhülsen 23 zumindest so genau und definiert in dem Steckergehäuse 19 angeordnet sind, dass sie bei durch den Zentrierstift 42 in der Zentrieröffnung 37 definiertem Heranführen der Steckkontakteinrichtung 17 an die Steckerstifte 40 auf dem Generatorbauteilträger 53 die Spitzen der Steckerstifte 40 übergreifen, damit dann bei einem Aufdrücken in Steckrichtung S der Steckkontakt erfolgt bzw. hergestellt wird.

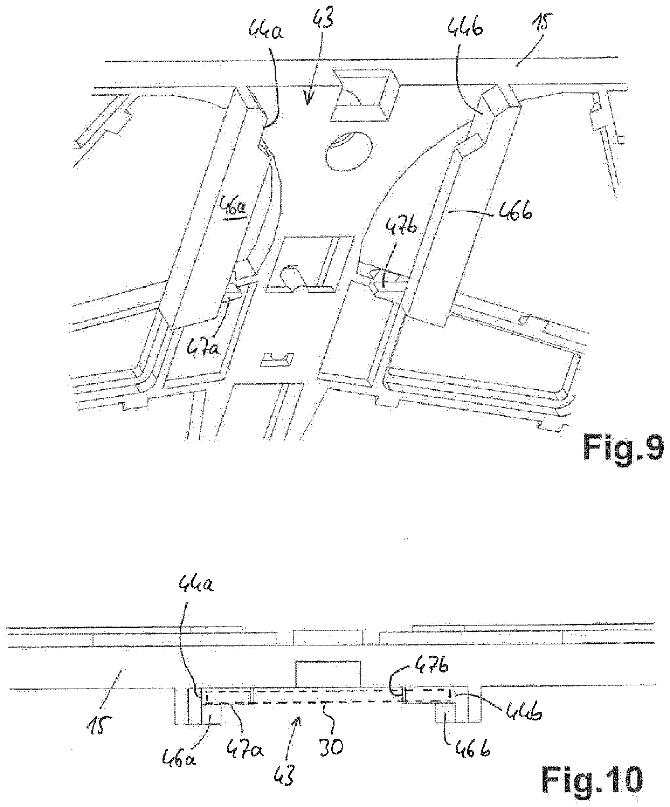

Während ein geringer Ausgleich von Toleranzen oder Positionsfehlern durch die vorgenannte gewisse Beweglichkeit der Steckerhülsen 23 im Steckergehäuse 19 erreicht wird, ist vor allem die Steckkontakteinrichtung 17 relativ zum Spulenträger 15 etwas beweglich gelagert. Dies wird anhand der Fig. 8 bis 10 erläutert. Vor allem aus der Fig. 9 ist zu ersehen, dass eine Steckergehäuseaufnahme 43 an einer Unterseite des Spulenträgers 15 für eine Art Einschub ausgebildet ist. Die Steckergehäuseaufnahme 43 weist zwei Seitenwände 44a links und 44b rechts auf, die nach unten lange Halteabschnitte 46a und 46b aufweisen, welche nach innen übergreifen. Nach hinten sind Anschläge 47a und 47b vorgesehen, um eine maximale Einschubtiefe zu definieren. Aus der Fig. 8 in der Unteransicht ist zu sehen, wie die seitlichen Außenkanten der Basisplatte 30 unter den Halteabschnitten 46a und 46b liegen, aber noch deutlichen Abstand zu den Seitenwänden 44a und 44b aufweisen. Dies geht auch aus der Darstellung der Fig. 10 hervor, bei der von der Steckkontakteinrichtung 17 am Spulenträger 15 nur die Basisplatte 30 gestrichelt dargestellt ist. Durch die im Vergleich zum Abstand der beiden Seitenwände 44a und 44b zueinander geringere Breite der Basisplatte 30 im Bereich von 1 mm bis 3 mm oder sogar 5 mm kann ein entsprechend großer, vorgenannter Bewegungsweg des Steckergehäuses 19 bzw. der Steckkontakteinrichtung 17 relativ zum Spulenträger 15 in einer Ebene senkrecht zur Steckrichtung S erreicht werden. In Einschubrichtung in die Steckergehäuseaufnahme 43 hinein ist, wie ebenfalls die Fig. 8 zeigt, ein noch größerer Bewegungsweg für die Steckkontakteinrichtung 17 gegeben. So entsteht eine Art schwimmende Lagerung der Steckkontakteinrichtung 17 bzw. des Steckergehäuses 19 an der Unterseite des Spulenträgers 15 mit Beweglichkeit in einer Ebene rechtwinklig zur Steckrichtung S bzw. parallel zur Fläche des Spulenträgers 15.

## Patentansprüche

1. Induktionskochfeld (50) mit mindestens einer Induktionsheizeinrichtung (11), wobei die Induktionsheizeinrichtung aufweist:
- mindestens eine Induktionsheizspule (13),
- eine Steckkontakteinrichtung (17),
- einen flächig ausgebildeten Spulenträger (15) für die mindestens eine Induktionsheizspule (13),
- an einer Unterseite des Spulenträgers (15) ist die Steckkontakteinrichtung (17) angeordnet mit einer Steckrichtung rechtwinklig zur Fläche des Spulenträgers,
- die Steckkontakteinrichtung (17) weist ein Steckergehäuse (19) auf, welches an der Unterseite des Spulenträgers (15) derart gehalten ist, dass das Steckergehäuse in einer Ebene parallel zur Fläche des Spulenträgers eine Bewegbarkeit mit einem definierten Bewegungsweg aufweist,
- das Steckergehäuse (19) weist mindestens zwei Aufnahmekammern (20) mit Erstreckungsrichtung parallel zur Steckrichtung auf, wobei die Aufnahmekammern nach unten offen sind,
- in jeder der Aufnahmekammern (20) ist ein Steckkontakt (23) angeordnet,
- eine Kontaktierungsleitung (28) verläuft von dem Steckkontakt (23) zu der Induktionsheizspule (13),
**dadurch gekennzeichnet, dass** das Induktionskochfeld (50) unter einer Kochfeldplatte ein Generatorgehäuse (51) aufweist, in dem ein Generatorbauteilträger (54) angeordnet ist, wobei oberhalb des Generatorgehäuses die Induktionsheizeinrichtung (11) angeordnet ist mit der nach unten weisenden Steckkontakteinrichtung (17), wobei auf dem Generatorbauteilträger (54) mindestens zwei nach oben stehende Steckkontakte (40) fest und unbewegbar angeordnet sind zum Aufstecken der Steckkontakteinrichtung der Induktionsheizeinrichtung.

2. Induktionskochfeld nach Anspruch 1, **dadurch gekennzeichnet, dass** die Steckkontakte auf dem Generatorbauteilträger (54) Steckerstifte (40) sind, vorzugsweise in Längsrichtung geschlitzt und/oder durchmesserveränderlich sind, wobei die Steckkontakte der Steckkontakteinrichtung (17) an der Induktionsheizeinrichtung (11) Steckerhülsen (23) sind, insbesondere im Durchmesser unveränderliche Steckerhülsen.

3. Induktionskochfeld nach Anspruch 1 oder 2, **dadurch gekennzeichnet, dass** auf dem Spulenträger (15) genau zwei Induktionsheizspulen (13) angeordnet sind, die vorzugsweise gleich groß sind und/oder gleich ausgebildet sind, wobei insbesondere die Stecckontakteinrichtung (17) vier Steckkontakte (23) aufweist.

4. Induktionskochfeld nach einem der vorhergehenden Ansprüche, **dadurch gekennzeichnet, dass** die Kontaktierungsleitung (28) der Steckkontakte (23) an die Induktionsheizspule (13) frei verlaufend und flexibel ist, wobei vorzugsweise die flexible Kontaktierungsleitung eine Drahtlitze ist, vorzugsweise aus der gleichen Drahtlitze wie die, aus der die Induktionsheizspule (13) gewickelt ist, insbesondere als abstehender und durchgehender Abschnitt der Induktionsheizspule.

5. Induktionskochfeld nach einem der vorhergehenden Ansprüche, **dadurch gekennzeichnet, dass** die Kontaktierungsleitung (28) an einem oberen Endbereich des Steckkontakts (23) befestigt ist, vorzugsweise geschweißt oder gelötet.

6. Induktionskochfeld nach einem der vorhergehenden Ansprüche, **dadurch gekennzeichnet, dass** die Steckkontakte Steckerhülsen (23) sind zum Aufstecken auf Steckerstifte (40).

7. Induktionskochfeld nach einem der vorhergehenden Ansprüche, **dadurch gekennzeichnet, dass** die Steckkontakte (23) einen Außendurchmesser aufweisen, der 1% bis maximal 20%, vorzugsweise 3% bis 8%, kleiner ist als der Innendurchmesser der Aufnahmekammer (20) auf der jeweils entsprechenden Höhe für eine definiert eingeschränkte freie Bewegbarkeit der Steckkontakte (23) in den Aufnahmekammern (20) mit definiertem Bewegungsweg.

8. Induktionskochfeld nach einem der vorhergehenden Ansprüche, **dadurch gekennzeichnet, dass** die Steckkontakteinrichtung (17) an dem Spulenträger (15) schwimmend gelagert ist, vorzugsweise durch eine einrastbare Lagerung mit Rasthaken (34) für eine Basisplatte (30) an mehreren Seiten.

9. Induktionskochfeld nach einem der vorhergehenden Ansprüche, **dadurch gekennzeichnet, dass** die Steckkontakteinrichtung (17) ein zweiteiliges Steckergehäuse (19) aufweist mit einer Basisplatte (30), die in einer Steckkontakteinrichtungsaufnahme an der Unterseite des Spulenträgers (15) seitlich bewegbar mit dem definierten Bewegungsweg der Steckkontakteinrichtung gehalten ist, wobei vorzugsweise die Basisplatte eine Radialhalterung für die Steckkontakte (23) aufweist, insbesondere als Bohrung und/oder als Hülsenabschnitt, wobei insbesondere die Aufnahmekammern (20) gebildet sind von Aufnahmehülsen (21) und einer Durchgangsöffnung im Deckel (33), wobei die Aufnahmehülsen als eine Art Hülsenabschnitt von der Basisplatte nach unten wegstehen.

10. Induktionskochfeld nach Anspruch 9, **dadurch gekennzeichnet, dass** die Steckkontakteinrichtung (17) einen Deckel (33) zum Aufstecken auf die Basisplatte (30) aufweist, wobei insbesondere eine Verbindungsrichtung von Basisplatte und Deckel senkrecht zur Fläche des Induktionsträgers ist, wobei der Deckel für jeden Steckkontakt (23) eine Durchgangsöffnung (36) aufweist zum Durchstehen und Durchragen der Steckkontakte, wobei vorzugsweise der Deckel fest und in unbewegbarer Position an der Basisplatte befestigt ist.

11. Induktionskochfeld nach Anspruch 9 oder 10, **dadurch gekennzeichnet, dass** die Kontaktierungsleitungen (28) von den Steckkontakten (23) zwischen Basisplatte (30) und Deckel (33) seitlich aus der Steckkontakteinrichtung (17) heraus verlaufen, insbesondere aus von der Basisplatte abstehenden Aufnahmehülsen (21) durch einen seitlichen Schlitz (22) der Aufnahmehülsen, wobei vorzugsweise die flexiblen Kontaktierungsleitungen von der Steckkontakteinrichtung in unterschiedliche Richtungen abgehen.

12. Induktionskochfeld nach einem der Ansprüche 9 bis 11, **dadurch gekennzeichnet, dass** die Steckkontakte (23) eine Verdickung oder einen seitlich abstehenden Vorsprung aufweisen, insbesondere nach Art eines umlaufenden Kragens (24), der breiter ist als eine Durchgangsöffnung (36) durch den Deckel (33), wobei vorzugsweise die Verdickung bzw. der Vorsprung zwischen Deckel und Aufnahmehülse an der Basisplatte ist.

13. Induktionskochfeld nach einem der vorhergehenden Ansprüche, **dadurch gekennzeichnet, dass** die Steckkontakteinrichtung (17) an einem Außenbereich des Spulenträgers (15) angeordnet ist, vorzugsweise innerhalb der Fläche des Spulenträgers und an einen Außenrand angrenzend, wobei insbesondere bei einem Spulenträger mit zwei Induktionsheizspulen (13) die Steckkontakteinrichtung zwischen den beiden Induktionsheizspulen angeordnet ist.

14. Induktionskochfeld nach einem der vorhergehenden Ansprüche, **dadurch gekennzeichnet, dass** an der Steckkontakteinrichtung (17), insbesondere an deren Außenseite, ein weiterer Steckverbinder befestigt ist, insbesondere durch eine werkzeuglos montierbare und lösbare Befestigung, vorzugsweise mittels einer Rastverbindung.

## Claims

1. Induction hob (50), comprising at least one induction heating device (11), wherein the induction heating device has:
- at least one induction heating coil (13),
- a plug-type contact device (17),
- a coil carrier (15) of flat design for the at least one induction heating coil (13),
- the plug-type contact device (17) is arranged on the bottom face of the coil carrier (15) with an insertion direction perpendicular to the surface of the coil carrier,
- the plug-type contact device (17) has a plug housing (19) which is held on the bottom face of the coil carrier (15) in such a way that the plug housing has an ability to move with a defined movement travel in a plane parallel to the surface of the coil carrier,
- the plug housing (19) has at least two receiving chambers (20) with a direction of extent parallel to the insertion direction, wherein the receiving chambers are open at the bottom,
- a plug-type contact (23) is arranged in each of the receiving chambers (20),
- a contact-making line (28) runs from the plug-type contact (23) to the induction heating coil (13),
**characterized in that**
the induction hob (50) has a generator housing (51) beneath a hob plate, a generator component carrier (54) being arranged in the generator housing, wherein the induction heating device (11) is arranged above the generator housing with a downwardly pointing plug-type contact device (17), wherein at least two upwardly projecting plug-type contacts (40) are arranged on the generator component carrier (54) in a fixed and unmovable manner for mounting the plug-type contact device of the induction heating device.

2. Induction hob according to Claim 1, **characterized in that** the plug-type contacts on the generator component carrier (54) are plug pins (40), preferably plug pins which are slotted and/or are of variable diameter in the longitudinal direction, wherein the plug-type contacts of the plug-type contact device (17) on the induction heating device (11) are plug sleeves (23), in particular plug sleeves of which the diameter cannot be varied.

3. Induction hob according to Claim 1 or 2, **characterized in that** precisely two induction heating coils (13) are arranged on the coil carrier (15), the said induction heating coils preferably being of identical size and/or identical design, wherein, in particular, the plug-type contact device (17) has four plug-type contacts (23).

4. Induction hob according to one of the preceding claims, **characterized in that** the contact-making line (28) of the plug-type contacts (23) to the induction heating coil (13) runs freely and is flexible, wherein preferably the flexible contact-making line is a wire strand, preferably composed of the same wire strand as that from which the induction heating coil (13) is wound, in particular is a projecting and continuous section of the induction heating coil.

5. Induction hob according to one of the preceding claims, **characterized in that** the contact-making line (28) is fastened, preferably welded or soldered, to an upper end region of the plug-type contact.

6. Induction hob according to one of the preceding claims, **characterized in that** the plug-type contacts are plug sleeves (23) for mounting on plug pins (40).

7. Induction hob according to one of the preceding claims, **characterized in that** the plug-type contacts (23) have an outside diameter which is 1% to at most 20%, preferably 3% to 8%, smaller than the inside diameter of the receiving chamber (20) at the respectively corresponding level for an ability of the plug-type contacts (23) to move freely in a manner which is restricted to a defined extent in the receiving chambers (20) with a defined movement travel.

8. Induction hob according to one of the preceding claims, **characterized in that** the plug-type contact device (17) is mounted on the coil carrier (15) in a floating manner, preferably by latching mounting with latching hooks (34) for a base plate (30) on several sides.

9. Induction hob according to one of the preceding claims, **characterized in that** the plug-type contact device (17) has a two-part plug housing (19) with a base plate (30) which is held in a plug-type contact device receptacle on the bottom face of the coil carrier (15) such that it can move laterally with the defined movement travel of the plug-type contact device, wherein the base plate preferably has a radial holder for the plug-type contacts (23), in particular in the form of a bore and/or in the form of a sleeve section, wherein in particular the receiving chambers (20) are formed by receiving sleeves (21), which project away downward from the base plate in the manner of a sleeve section, and a passage opening in the cover (33).

10. Induction hob according to Claim 9, **characterized in that** the plug-type contact device (17) has a cover (33) for mounting on the base plate (30), wherein, in particular, a connecting direction of base plate and cover is perpendicular to the surface of the induction carrier, wherein the cover for each plug-type contact (23) has a passage opening (39) for the plug-type contacts to project through and protrude through, wherein the cover is preferably fastened to the base plate in a fixed manner and in an unmovable position.

11. Induction hob according to Claim 9 or 10, **characterized in that** the contact-making lines (28) run laterally out of the plug-type contact device (17) from the plug-type contacts (23) between base plate (30) and cover (33), in particular out of receiving sleeves (21) which project from the base plate through a lateral slot (22) in the receiving sleeves, wherein the flexible contact-making lines preferably exit from the plug-type contact device in different directions.

12. Induction hob according to one of Claims 9 to 11, **characterized in that** the plug-type contacts (23) have a thickened portion or a laterally projecting protrusion, in particular in the manner of a circumferential collar (24) which is wider than a passage opening (36) through the cover (33), wherein the thickened portion or the protrusion is preferably between cover and receiving sleeve on the base plate.

13. Induction hob according to one of the preceding claims, **characterized in that** the plug-type contact device (17) is arranged on an outer region of the coil carrier, preferably within the surface of the coil carrier and adjacent to an outer edge, wherein, in particular in the case of a coil carrier with two induction heating coils (13), the plug-type contact device is arranged between the two induction heating coils.

14. Induction hob according to one of the preceding claims, **characterized in that** a further plug-type connector is fastened to the plug-type contact device (17), in particular to the outer face of the said plug-type contact device, in particular by a fastening which can be mounted and released without tools, preferably by means of a latching connection.

## Revendications

1. Table de cuisson par induction (50) comprenant au moins un dispositif de chauffage par induction (11), le dispositif de chauffage par induction comprenant :
- au moins une bobine de chauffage par induction (13),
- un dispositif de contact enfichable (17),
- un porte-bobine (15) de configuration plane pour l'au moins une bobine de chauffage par induction (13),
- le dispositif de contact enfichable (17) étant disposé au niveau d'un côté inférieur du porte-bobine (15) avec un sens d'enfichage perpendiculaire à la surface du porte-bobine,
- le dispositif de contact enfichable (17) possédant un boîtier de fiche (19) qui est maintenu au niveau d'un côté inférieur du porte-bobine (15) de telle sorte que le boîtier de fiche présente une mobilité avec une course de déplacement définie dans un plan parallèle à la surface du porte-bobine,
- le boîtier de fiche (19) possédant au moins deux chambres d'accueil (20) ayant une direction de projection parallèle au sens d'enfichage, les chambres d'accueil étant ouvertes vers le bas,
- un contact à enfichage (23) étant disposé dans chacune des chambres d'accueil (20),
- une ligne d'établissement de contact (28) s'étendant entre le contact à enfichage (23) et la bobine de chauffage par induction (13),
**caractérisée en ce que**
la table de cuisson par induction (50) possède sous une plaque de table de cuisson un boîtier de générateur (51) dans lequel est disposé un porte-composants de générateur (54), le dispositif de chauffage par induction (11) étant disposé au-dessus du boîtier de générateur avec le dispositif de contact enfichable (17) orienté vers le bas, au moins deux contacts à enfichage (40) dressés vers le haut étant disposés à demeure et de manière immobile sur le porte-composants de générateur (54) en vue d'enficher le dispositif de contact enfichable du dispositif de chauffage par induction.

2. Table de cuisson par induction selon la revendication 1, **caractérisée en ce que** les contacts à enfichage sur le porte-composants de générateur (54) sont des broches mâles de fiche (40), de préférence fendues dans la direction longitudinale et/ou à diamètre variable, les contacts à enfichage du dispositif de contact enfichable (17) au niveau du dispositif de chauffage par induction (11) étant des douilles femelles de fiche (23), notamment des douilles femelles de fiche à diamètre invariable.

3. Table de cuisson par induction selon la revendication 1 ou 2, **caractérisée en ce qu'**exactement deux bobines de chauffage par induction (13) sont disposées sur le porte-bobine (15), lesquelles sont de préférence de même taille et/ou de configuration identique, le dispositif de contact enfichable (17) possédant notamment quatre contacts à enfichage (23).

4. Table de cuisson par induction selon l'une des revendications précédentes, **caractérisée en ce que** la ligne d'établissement de contact (28) des contacts à enfichage (23) au niveau de la bobine de chauffage par induction (13) suit un tracé libre et est flexible, la ligne d'établissement de contact flexible étant de préférence un fil électrique souple, de préférence composé du même fil électrique souple que celui dans lequel est bobinée la bobine de chauffage par induction (13), notamment sous la forme d'une portion en saillie et d'un seul tenant de la bobine de chauffage par induction.

5. Table de cuisson par induction selon l'une des revendications précédentes, **caractérisée en ce que** la ligne d'établissement de contact (28) est fixée au niveau d'une zone d'extrémité supérieure du contact à enfichage (23), de préférence soudée ou brasée.

6. Table de cuisson par induction selon l'une des revendications précédentes, **caractérisée en ce que** les contacts à enfichage sont des douilles femelles de fiche (23) destinées à être enfichées sur les broches mâles de fiche (40).

7. Table de cuisson par induction selon l'une des revendications précédentes, **caractérisée en ce que** les contacts à enfichage (23) possèdent un diamètre extérieur qui est plus petit de 1 % à 20 % au maximum, de préférence de 3 % à 8 %, que le diamètre intérieur de la chambre d'accueil (20) sur la hauteur respectivement correspondante pour une mobilité libre restreinte de manière définie des contacts à enfichage (23) dans les chambres d'accueil (20) avec une course de déplacement définie.

8. Table de cuisson par induction selon l'une des revendications précédentes, **caractérisée en ce que** le dispositif de contact enfichable (17) est monté flottant sur le porte-bobine (15), de préférence par un support encliquetable pourvu de crochets d'encliquetage (34) pour une plaque de base (30) sur plusieurs côtés.

9. Table de cuisson par induction selon l'une des revendications précédentes, **caractérisée en ce que** le dispositif de contact enfichable (17) possède un boîtier de fiche (19) en deux parties pourvu d'une plaque de base (30), qui est maintenue dans un logement de dispositif de contact enfichable au niveau du côté inférieur du porte-bobine (15) mobile latéralement avec la course de déplacement définie du dispositif de contact enfichable, la plaque de base possédant de préférence un élément de maintien radial pour les contacts à enfichage (23), notamment sous la forme d'un perçage et/ou d'une portion de douille, les chambres d'accueil (20) étant notamment formées par des douilles d'accueil (21) et une ouverture de passage dans le couvercle (33), les douilles d'accueil s'écartant de la plaque de base vers le bas à la manière d'une portion de douille.

10. Table de cuisson par induction selon la revendication 9, **caractérisée en ce que** le dispositif de contact enfichable (17) possède un couvercle (33) destiné à être enfiché sur la plaque de base (30), une direction d'assemblage de la plaque de base et du couvercle étant notamment perpendiculaire à la surface du porte-induction, le couvercle possédant pour chaque contact à enfichage (23) une ouverture de passage (36) servant au passage traversant et à la saillie des contacts à enfichage, le couvercle étant de préférence fixé à demeure et en position immuable à la plaque de base.

11. Table de cuisson par induction selon la revendication 9 ou 10, **caractérisée en ce que** les lignes d'établissement de contact (28) s'étendent latéralement hors du dispositif de contact enfichable (17) depuis les contacts à enfichage (23) entre la plaque de base (30) et le couvercle (33), notamment hors des douilles d'accueil (21) faisant saillie de la plaque de base à travers une fente latérale (22) des douilles d'accueil, les lignes d'établissement de contact flexibles partant du dispositif de contact enfichable de préférence dans des directions différentes.

12. Table de cuisson par induction selon l'une des revendications 9 à 11, **caractérisée en ce que** les contacts à enfichage (23) possèdent un épaississement ou une protubérance qui fait saillie latéralement, notamment sous la forme d'une collerette (24) circonférentielle qui est plus large qu'une ouverture de passage (36) à travers le couvercle (33), l'épaississement ou la protubérance se trouvant de préférence entre le couvercle et la douille d'accueil sur la plaque de base.

13. Table de cuisson par induction selon l'une des revendications précédentes, **caractérisée en ce que** le dispositif de contact enfichable (17) est disposé au niveau d'une zone extérieure du porte-bobine (15), de préférence à l'intérieur de la surface du porte-bobine et de manière adjacente à un bord extérieur, le dispositif de contact enfichable étant notamment disposé entre les deux bobines d'induction dans le cas d'un porte-bobine pourvu de deux bobines de chauffage par induction (13).

14. Table de cuisson par induction selon l'une des revendications précédentes, **caractérisée en ce qu'**un connecteur à enfichage supplémentaire est fixé au dispositif de contact enfichable (17), notamment au niveau de son côté extérieur, notamment par une fixation qui peut être montée et détachée sans outils, de préférence au moyen d'une liaison par encliquetage.
